# EUROPEAN PATENT SPECIFICATION

(11) **EP 3 971 069 B1**
(45) Date of publication and mention of the grant of the patent: **14.12.2022**
(21) Application number: 21171197.3
(22) Date of filing: 29.04.2021
(51) Int. Cl.: B62J 9/23, B62J 9/24, B62K 19/40

(54) **STRADDLED VEHICLE AND MANUFACTURING METHOD FOR MANUFACTURING STRADDLED VEHICLE**
GRÄTSCHSITZFAHRZEUG UND VERFAHREN ZUR HERSTELLUNG EINS GRÄTSCHSITZFAHRZEUGS
VÉHICULE ENJAMBEUR ET SON PROCÉDÉ DE FABRICATION

(30) Priority: 18.09.2020 JP 2020157664
(43) Date of publication of application: 23.03.2022
(73) Proprietor: Yamaha Hatsudoki Kabushiki Kaisha, Iwata-shi, Shizuoka 438-8501 (JP)
(72) Inventor: MIMURA, Satoshi, Iwata-shi, 4388501 (JP); UEDA, Daisuke, Iwata-shi, 4388501 (JP)
(74) Representative: Grünecker Patent- und Rechtsanwälte PartG mbB

(56) References cited:
- DE-A1-102020 202 984

## Description

The present invention relates to a straddled vehicle according to the preamble of independent claim 1. Such a straddled vehicle can be taken from the prior art document DE 10 2020 202984 A1.

A side case may be attached to a straddled vehicle. The side case is attached to the vehicle via a stay. For example, there is a type of vehicle that include a recess provided to a vehicle body cover for attaching a stay. Alternatively, in Japan Patent Laid-open Patent Publication No. JP-A- 2011-57071, a stay is attached to a highly rigid portion such as a grab rail.

In a case where the vehicle body cover include a recess for attaching a stay, the vehicle body cover needs to have high rigidity to support the side case. In a case where the stay is attached to the grab rail as in JP-A- 2011-57071, high rigidity is not required for the vehicle body cover. However, since the mounting position of the side case is far from the grab rail, the stay becomes large.

On the other hand, in a straddled vehicle, the rigidity of the vehicle body frame is high. However, in a case where the stay is attached to the vehicle body frame, the vehicle body cover covering the vehicle body frame interferes with the stay. Therefore, it is difficult to assemble the stay to the vehicle body cover. In order to avoid interference of the vehicle body cover with the stay, a hole for passing the stay is provided in the vehicle body cover.

For the same model of a straddled vehicle, two types of vehicles may be manufactured, one with a side case (hereinafter referred to as "optional type") and one without a side case (hereinafter referred to as "standard type"). In that case, if a hole for passing the stay is provided in the vehicle body cover so that the vehicle body can be shared between the optional type and the standard type, the hole becomes visible in the standard type vehicle. Therefore, the design of the standard type vehicle is reduced.

Further, if the vehicle body cover is not provided with a hole for passing the stay, it is necessary to drill the hole in the vehicle body cover when manufacturing the optional type vehicle. Therefore, the manufacturing process of the optional type vehicle is complicated. Alternatively, when a user attaches the side case after acquiring the standard type vehicle, it is necessary for the user to drill the hole in the vehicle body cover. Therefore, the work for attaching the side case to the standard type vehicle becomes complicated.

An object of the present invention is to provide a straddled vehicle which can easily mount a side case and suppress deterioration of design. According to the present invention said object is solved by a straddled vehicle according to the features of independent claim 1. Preferred embodiments are laid down in the dependent claims.

A straddled vehicle according to a first aspect includes a seat, a frame, a vehicle body cover, a bracket, a stay, a side case, and a first side cover. The frame is arranged below the seat. The vehicle body cover includes an opening located on a lateral side of the frame and covers the frame from the lateral side. The bracket is arranged in the opening and connected to the frame. The stay includes a connecting portion and a mounting portion. The connecting portion is connected to the bracket. The mounting portion extends from the connecting portion. The side case is attached to the mounting portion. The first side cover is attached to the vehicle body cover. The first side cover overlaps with the connecting portion as seen in a vehicle side view.

In the straddled vehicle according to the first aspect, the straddled vehicle includes the bracket for attaching the stay for the side case. Therefore, by attaching the stay to the bracket and attaching the first side cover to the vehicle body cover, an optional type vehicle is manufactured. In the optional type vehicle, the side case can be easily attached to the vehicle. Further, the mounting portion of the stay is hidden by the side case, and the connecting portion of the stay is hidden by the first side cover. As a result, the design of the optional type vehicle is improved.

The stay may be made of metal. The first side cover may be made of resin. In this case, the metal stay improves the support rigidity of the side case.

The straddled vehicle may further include a plurality of fixing members. The plurality of fixing members may fix the first side cover to the vehicle body cover. At least one of the plurality of fixing members may overlap with the side case as seen in the vehicle side view. In this case, the side case restricts access to the fixing member. As a result, the anti-theft effect is improved.

The vehicle body cover may include a plurality of holes. The fixing member may be inserted into a part of the plurality of holes. At least one of the plurality of holes may overlap with the stay as seen in the vehicle side view. In this case, the hole used for mounting the side cover in the standard type vehicle is hidden by the stay in the optional type vehicle. As a result, the deterioration of the design is suppressed.

The plurality of fixing members may include a first fixing member and a second fixing member. The plurality of holes may include a first hole, a second hole, and a third hole. The first fixing member may be inserted into the first hole. The second fixing member may be inserted into the second hole. The third hole may be arranged between the first hole and the second hole. The third hole may overlap with the stay as seen in the vehicle side view. In this case, the first to third holes are used for attaching the side cover in the standard type vehicle, and the third hole is hidden by the stay in the optional type vehicle. As a result, the deterioration of the design is suppressed.

The mounting portion includes a mounting hole into which the side case is mounted. The mounting holes are open facing upward. At least part of the first side cover does not overlap with the mounting hole as seen in a vehicle top view. In this case, it is possible to prevent the first side cover from interfering with the side case when the side case is attached. This facilitates the mounting of the side case.

The connecting portion may include a through hole extending in a front-rear direction of the vehicle. The bracket may include a first bracket and a second bracket. The first bracket may be located in front of the connecting portion. The second bracket may be located behind the connecting portion. The straddled vehicle may further include a shaft. The shaft may be passed through the through hole and fixed to the first bracket and the second bracket. In this case, the support rigidity of the side case is improved.

### BRIEF DESCRIPTION OF THE DRAWINGS

FIG. 1 is a side view of a standard type straddled vehicle according to an embodiment.
FIG. 2 is a side view of an optional type straddled vehicle according to the embodiment.
FIG. 3 is a side view of a rear portion of the standard type straddled vehicle.
FIG. 4 is a side view of the rear portion of the straddled vehicle from which a second side cover has been removed.
FIG. 5 is a perspective view of the rear portion of the straddled vehicle from which the second side cover has been removed.
FIG. 6 is a plan sectional view of the rear portion of the standard type straddled vehicle.
FIG. 7 is a perspective view of a first bracket and a second bracket.
FIG. 8 is a perspective view of the second side cover.
FIG. 9 is a top view of the rear portion of the standard type straddled vehicle.
FIG. 10 is a side view of the rear portion of the optional type straddled vehicle in which a side case is omitted.
FIG. 11 is an exploded perspective view of the rear portion of the optional type straddled vehicle.
FIG. 12 is a side view of the rear portion of the optional type straddled vehicle from which a first side cover has been removed.
FIG. 13 is an exploded perspective view of the rear portion of the optional type straddled vehicle.
FIG. 14 is a perspective view of the side case.
FIG. 15 is a top view of the rear portion of the optional type straddled vehicle.
FIG. 16 is a flowchart showing a method for manufacturing the straddled vehicles.
FIG. 17 is a perspective view of the rear portion of the optional type straddled vehicle according to a first modification.
FIG. 18 is a side view showing the optional type straddled vehicle according to a second modification.
FIG. 19 is a side view of the rear portion of the optional type straddled vehicle according to the second modification.

### DESCRIPTION OF EMBODIMENTS

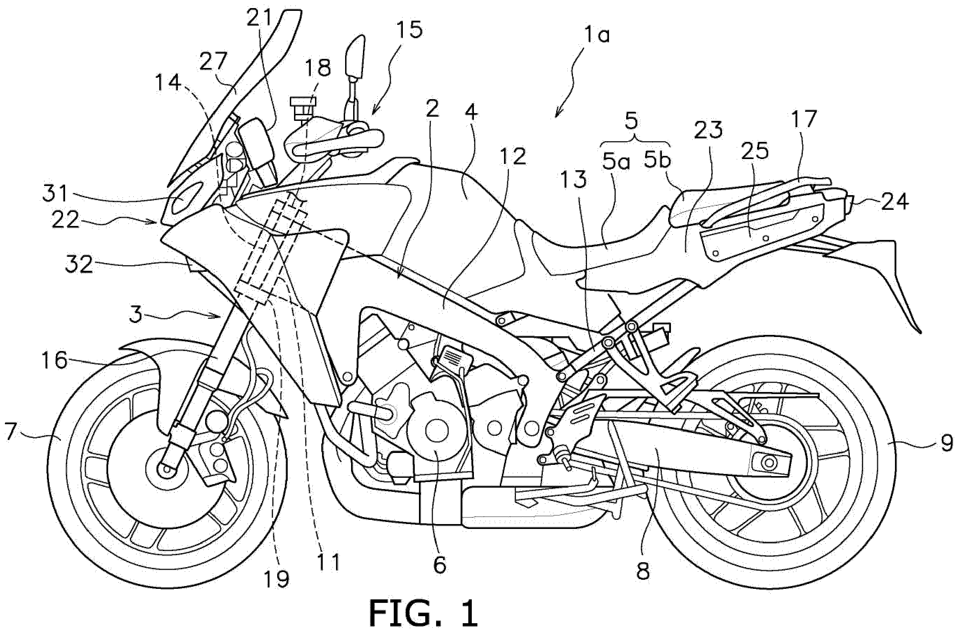

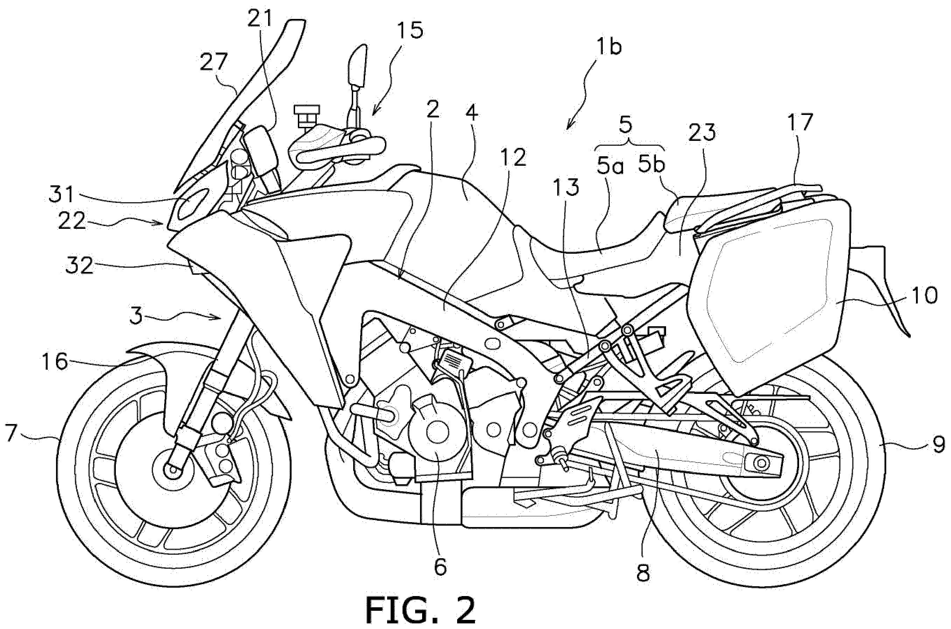

Hereinafter, a straddled vehicle according to an embodiment will be described with reference to the drawings. FIG. 1 is a side view of a standard type straddled vehicle 1a according to the embodiment. FIG. 2 is a side view of an optional type straddled vehicle 1b according to the embodiment. The optional type straddled vehicle 1b differs from the standard type straddled vehicle 1a in that a side case 10 is attached. The basic structure is common to the optional type straddled vehicle 1b and the standard type straddled vehicle 1a. Therefore, first, the structure of the standard type straddled vehicle 1a will be described.

As illustrated in FIG. 1, the straddled vehicle 1a includes a vehicle body frame 2, a steering device 3, a fuel tank 4, a seat 5, a power unit 6, a front wheel 7, a swing arm 8, and a rear wheel 9. The vehicle body frame 2 includes a head pipe 11, a main frame 12, and a rear frame 13. The main frame 12 is connected to the head pipe 11. The main frame 12 extends rearward from the head pipe 11.

The rear frame 13 is connected to the main frame 12. The rear frame 13 extends rearward from the main frame 12. The rear frame 13 is arranged below the seat 5. In the present embodiment, the front-back, left-right, and up-down directions mean the front-back, left-right, and up-down directions as seen from the rider seated on the seat 5.

The steering device 3 is turnably supported by the head pipe 11. The steering device 3 rotatably supports the front wheel 7. The steering device 3 includes a steering shaft 14, a handle member 15, a front fork 16, an upper bracket 18, and a lower bracket 19. The steering shaft 14 is inserted into the head pipe 11. The handle member 15 is arranged above the head pipe 11. The handle member 15 extends in a left-right direction of the vehicle.

A meter unit 21 is arranged in front of the handle member 15. The meter unit 21 includes, for example, a speedometer. The front fork 16 is connected to the steering shaft 14 via the upper bracket 18 and the lower bracket 19. The front fork 16 rotatably supports the front wheel 7.

The fuel tank 4 is arranged behind the head pipe 11. The fuel tank 4 is supported by the main frame 12. The seat 5 is arranged behind the fuel tank 4. The seat 5 is arranged above the rear frame 13. The seat 5 includes a rider's seat 5a and a tandem seat 5b. The rider's seat 5a is arranged between the fuel tank and the tandem seat 5b. The tandem seat 5b is arranged behind the rider's seat 5a. The rider's seat 5a and the tandem seat 5b are provided separately from each other. The rider's seat 5a and the tandem seat 5b may be integrated with each other.

A grab bar 17 is arranged around the rear portion of the seat 5. The grab bar 17 are arranged behind and on the left and right sides of the seat 5. Specifically, the grab bar 17 are arranged behind and on the left and right sides of the tandem seat 5b. The grab bar 17 is supported by the rear frame 13.

The power unit 6 is arranged below the fuel tank 4. The power unit 6 is supported by the main frame 12. The power unit 6 includes, for example, an internal combustion engine. The rear wheel 9 is supported by the main frame 12 via the swing arm 8. The rear wheel 9 is rotatably supported by the swing arm 8. The swing arm 8 is swingably supported by the main frame 12.

The straddled vehicle 1a includes a front cowl 22. The front cowl 22 is arranged in front of and both lateral sides of the head pipe 11. A windshield 27 is arranged above the front cowl 22. A position light 31 and a headlight 32 are arranged on the front cowl 22.

The straddled vehicle 1a includes a vehicle body cover 23. The vehicle body cover 23 is arranged below the seat 5. The vehicle body cover 23 covers the rear frame 13 from the left side and the right side. A tail light 24 is arranged at the rear portion of the vehicle body cover 23.

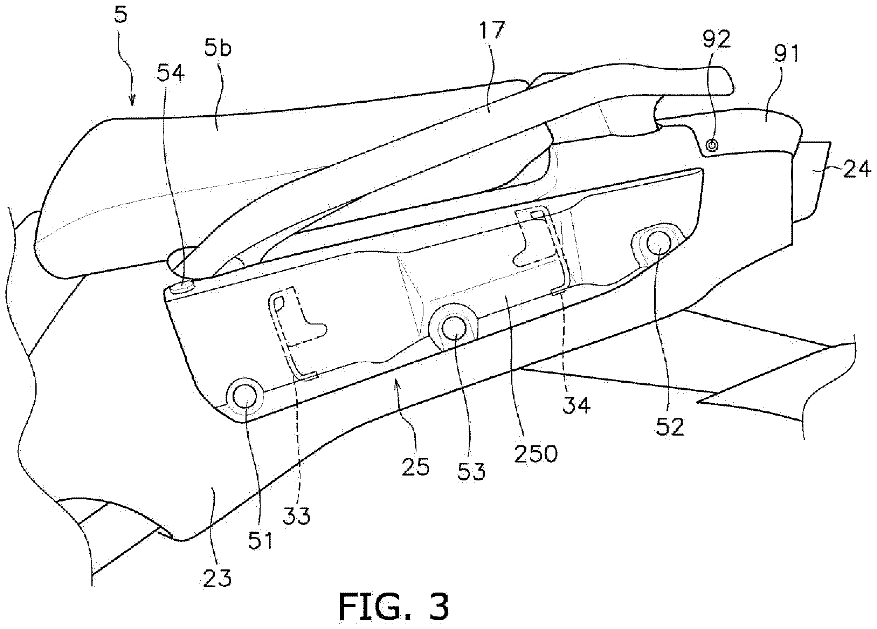

FIG. 3 is a side view of the rear portion of the straddled vehicle 1a. As illustrated in FIG. 3, a second side cover 25 is attached to a side surface of the vehicle body cover 23. The second side cover 25 is provided separately from the vehicle body cover 23. The second side cover 25 is made of, for example, resin. The second side cover 25 may be made of another material such as metal.

The second side cover 25 is detachably attached to the vehicle body cover 23. The second side cover 25 is arranged below the rear portion of the seat 5 as seen in a vehicle side view. The second side cover 25 is arranged below the tandem seat 5b as seen in the vehicle side view. The second side cover 25 is arranged below the grab bar 17 as seen in the vehicle side view.

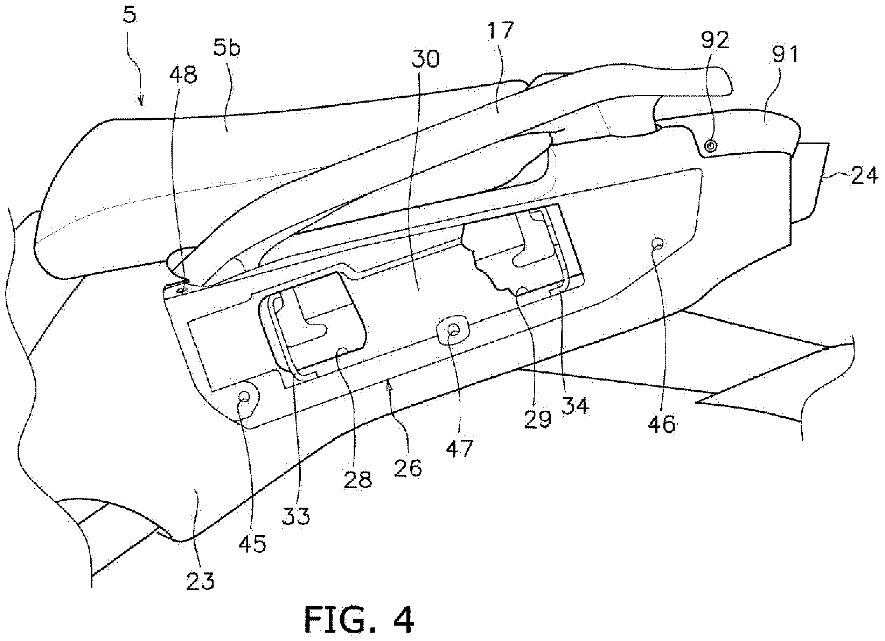

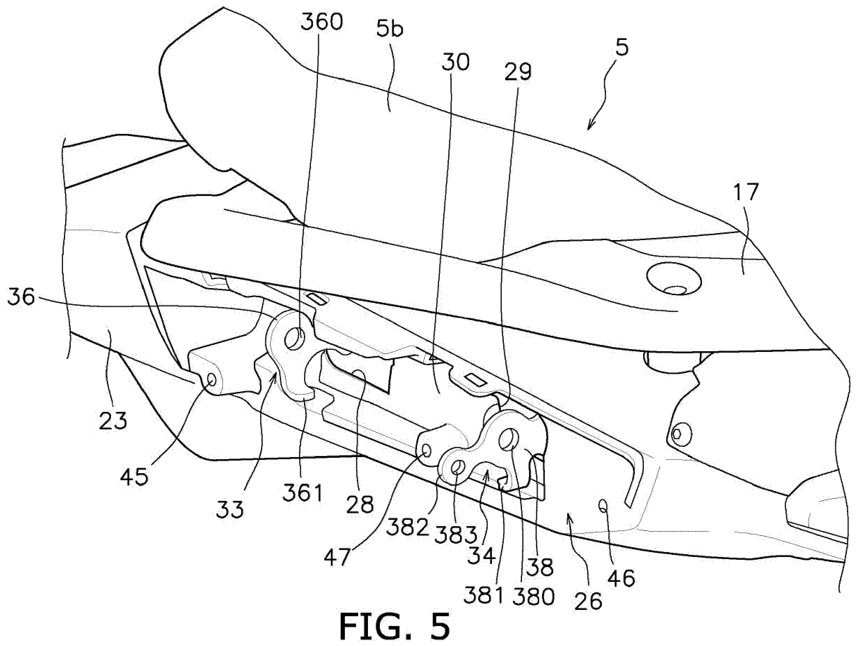

FIG. 4 is a side view of the rear portion of the straddled vehicle 1a from which the second side cover 25 has been removed. FIG. 5 is a perspective view of the rear portion of the straddled vehicle 1a from which the second side cover 25 has been removed. As illustrated in FIGS. 4 and 5, the vehicle body cover 23 includes the recess 26. The recess 26 is provided on the side surface of the vehicle body cover 23. The recess 26 is recessed laterally inward from the side surface of the vehicle body cover 23. The vehicle body cover 23 includes openings 28 and 29. The openings 28 and 29 are arranged in the recess 26. The openings 28 and 29 may be holes or notches. The openings 28 and 29 are located on the lateral side of the rear frame 13. A part of the rear frame 13 is visible through the openings 28 and 29. Specifically, the openings 28 and 29 include a first opening 28 and a second opening 29. The first opening 28 and the second opening 29 are arranged apart from each other in a front-rear direction of the vehicle. The second opening 29 is arranged behind the first opening 28. An inner side wall 30 of the recess 26 is arranged between the first opening 28 and the second opening 29.

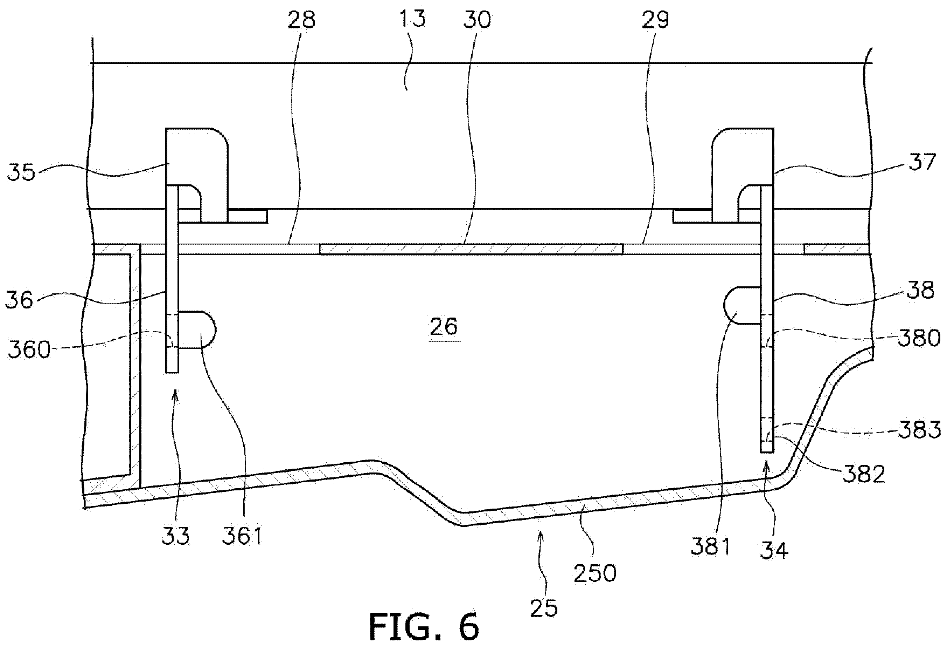

The straddled vehicle 1a includes brackets 33 and 34. The brackets 33 and 34 are used in the optional type straddled vehicle 1b to attach the stay for the side case 10 to the vehicle. FIG. 6 is a plan sectional view of the rear portion of the straddled vehicle 1a. As illustrated in FIGS. 4 to 6, the brackets 33 and 34 include a first bracket 33 and a second bracket 34. The first bracket 33 and the second bracket 34 are arranged apart from each other in the front-rear direction. The second bracket 34 is arranged behind the first bracket 33.

The first bracket 33 and the second bracket 34 are connected to the rear frame 13. The first bracket 33 is arranged in the first opening 28. The first bracket 33 extends laterally outward from the rear frame 13 through the first opening 28. The second bracket 34 is arranged in the second opening 29. The second bracket 34 extends laterally outward from the rear frame 13 through the second opening 29.

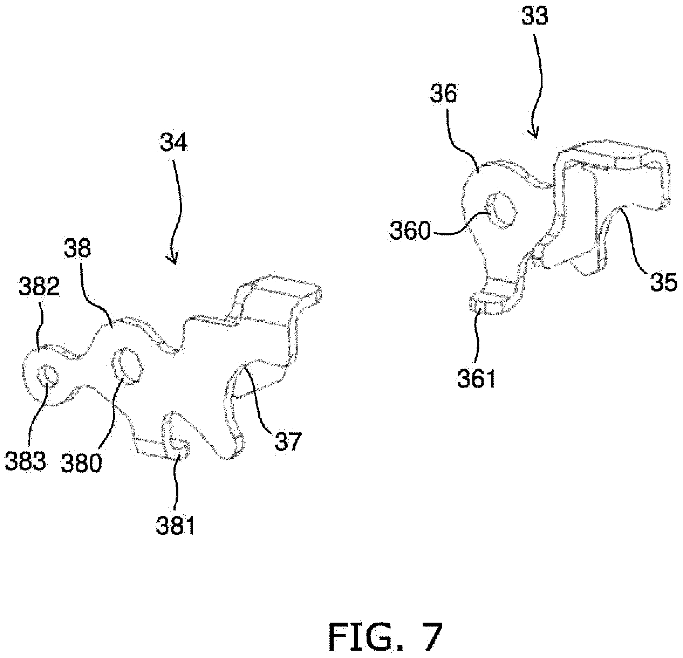

FIG. 7 is a perspective view of the first bracket 33 and the second bracket 34. As illustrated in FIG. 7, the first bracket 33 includes a first frame fixing portion 35 and a first stay fixing portion 36. The first frame fixing portion 35 is located laterally inward of the first opening 28. The first frame fixing portion 35 is connected to the rear frame 13. For example, the first frame fixing portion 35 is fixed to the rear frame 13 by welding. The first stay fixing portion 36 is located laterally outward of the first opening 28. The first stay fixing portion 36 includes a hole 360. The hole 360 extends through the first stay fixing portion 36 in the front-rear direction. The stay for the side case 10 is attached to the first stay fixing portion 36 as described later. A first protrusion 361 is connected to the first stay fixing portion 36. The first protrusion 361 is connected to a lower portion of the first stay fixing portion 36, and protrudes rearward from the first stay fixing portion 36.

The second bracket 34 includes a second frame fixing portion 37 and a second stay fixing portion 38. The second frame fixing portion 37 is located laterally inward of the second opening 29. The second frame fixing portion 37 is connected to the rear frame 13. For example, the second frame fixing portion 37 is fixed to the rear frame 13 by welding. The second stay fixing portion 38 is located laterally outward of the second opening 29. The second stay fixing portion 38 includes a hole 380. The hole 380 extends through the second stay fixing portion 38 in the front-rear direction. The stay for the side case 10 is attached to the second stay fixing portion 38 as described later. A second protrusion 381 and a first alignment portion 382 are connected to the second stay fixing portion 38. The second protrusion 381 is connected to a lower portion of the second stay fixing portion 38, and protrudes forward from the second stay fixing portion 38. The first alignment portion 382 extends laterally outward from the second stay fixing portion 38. The first alignment portion 382 includes a hole 383. The hole 383 extends through the first alignment portion 382 in the front-rear direction.

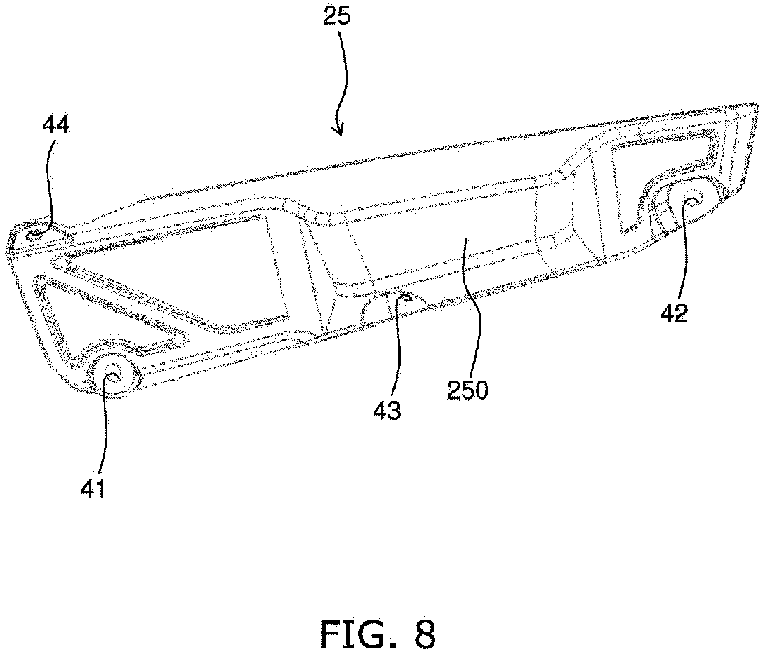

The second side cover 25 is attached to the vehicle body cover 23 and closes the openings 28 and 29. The first bracket 33 and the second bracket 34 are arranged in the second side cover 25. As seen in the vehicle side view, the first bracket 33 and the second bracket 34 overlap with the second side cover 25. As seen in the vehicle side view, the openings 28 and 29 overlap with the second side cover 25. The first bracket 33 and the second bracket 34 are arranged between the recess 26 and the second side cover 25. FIG. 8 is a perspective view of the second side cover 25. As illustrated in FIG. 8, the second side cover 25 includes a bulging portion 250. The bulging portion 250 has a shape protruding laterally outward.

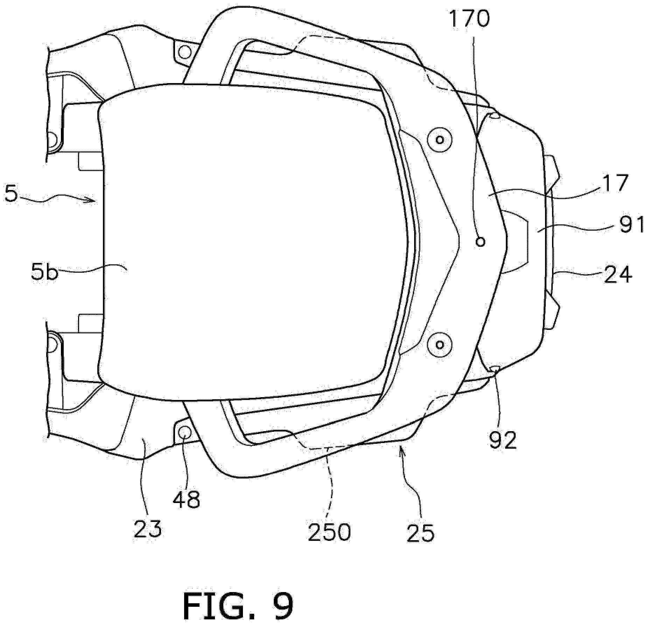

At least a part of the brackets 33 and 34 is arranged in the bulging portion 250. Specifically, the second bracket 34 is arranged within the bulging portion 250. As seen in the vehicle side view, the second bracket 34 overlaps with the bulging portion 250. The second bracket 34 overlaps with the bulging portion 250 as seen in a vehicle top view. FIG. 9 is a top view of the rear portion of the straddled vehicle 1a. As illustrated in FIG. 9, the second bracket 34 overlaps with the grab bar 17 as seen in the vehicle top view. The bulging portion 250 overlaps with the grab bar 17 as seen in the vehicle top view.

As illustrated in FIG. 8, the second side cover 25 includes first to fourth mounting holes 41 to 44. The first to third mounting holes 41 to 43 are arranged on a side surface of the second side cover 25. The first to third mounting holes 41 to 43 are arranged along a lower edge of the second side cover 25. The second mounting hole 42 is arranged rearward of the first mounting hole 41. The third mounting hole 43 is arranged between the first mounting hole 41 and the second mounting hole 42. The fourth mounting hole 44 is arranged on an upper surface of the second side cover 25.

As illustrated in FIG. 4, the vehicle body cover 23 includes first to fourth holes 45 to 48. The first to fourth holes 45 to 48 are arranged at positions corresponding to the first to fourth mounting holes 41 to 44 of the second side cover 25, respectively. The first hole 45 is arranged forward of the first bracket 33. The second hole 46 is arranged rearward of the second bracket 34. The third hole 47 is arranged between the first hole 45 and the second hole 46. The third hole 47 is arranged rearward of the first bracket 33 and forward of the second bracket 34.

As illustrated in FIG. 3, a first fixing member 51 is inserted into the first mounting hole 41 of the second side cover 25 and the first hole 45 of the vehicle body cover 23. A second fixing member 52 is inserted into the second mounting hole 42 of the second side cover 25 and the second hole 46 of the vehicle body cover 23. A third fixing member 53 is inserted into the third mounting hole 43 of the second side cover 25 and the third hole 47 of the vehicle body cover 23. A fourth fixing member 54 is inserted into the fourth mounting hole 44 of the second side cover 25 and the fourth hole 48 of the vehicle body cover 23. The first to fourth fixing members 51 to 54 are, for example, bolts. The second side cover 25 is attached to the vehicle body cover 23 by the first to fourth fixing members 51 to 54.

The structure on the left side of the standard type straddled vehicle 1a has been described above, but the structure on the right side is symmetrical with the structure on the left side and is the same as the structure on the left side.

Next, the optional type straddled vehicle 1b will be described. As described above, the optional type straddled vehicle 1b includes the same structure as the standard type straddled vehicle 1a except for the second side cover 25. As illustrated in FIG. 2, the optional type straddled vehicle 1b includes the side case 10. Although only the left side case 10 is illustrated in FIG. 2, the straddled vehicle 1b also has the same side case on the right side as on the left side.

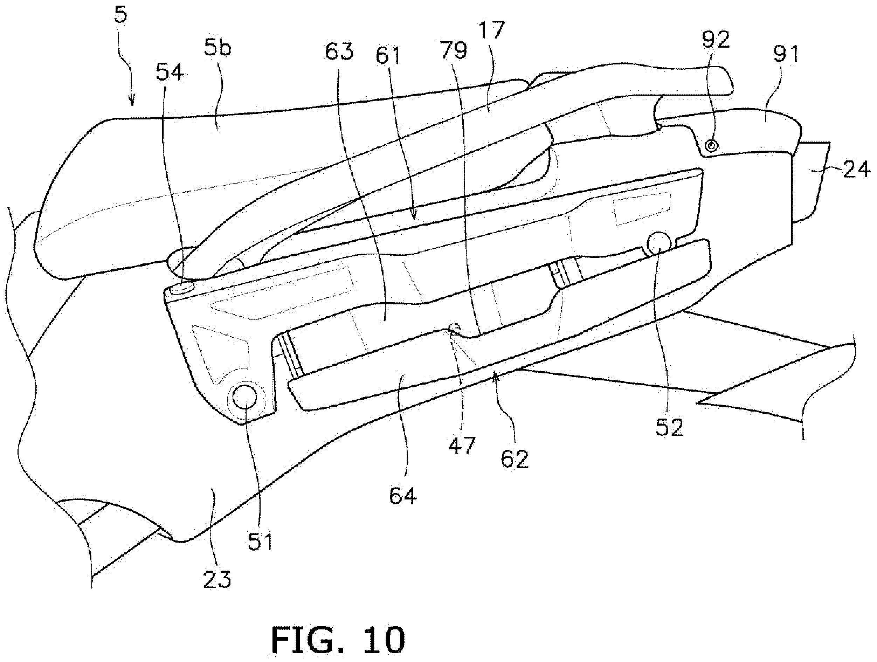

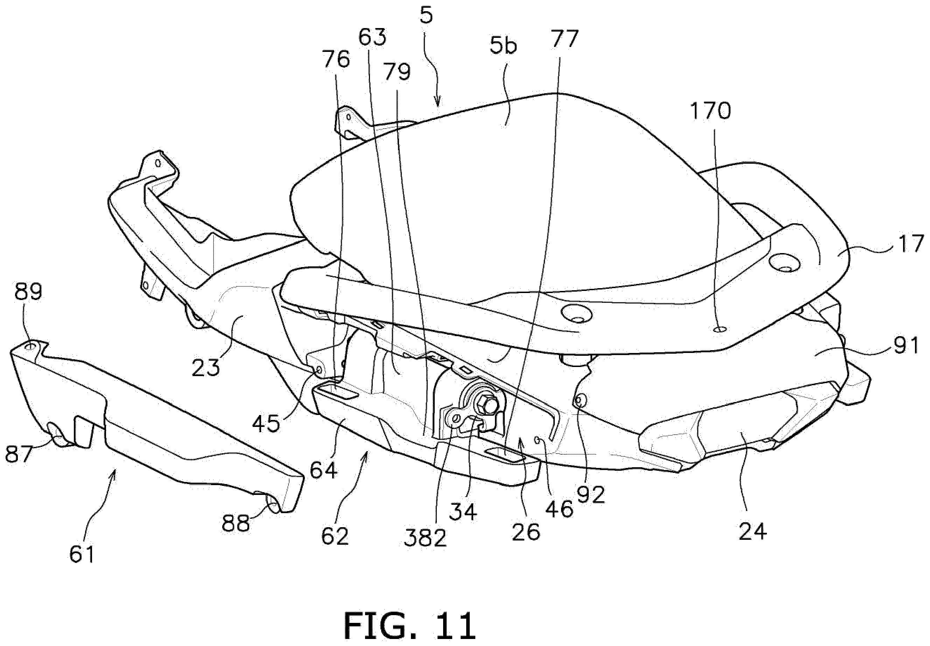

FIG. 10 is a side view of the rear portion of the straddled vehicle 1b in which the side case 10 is omitted. FIG. 11 is an exploded perspective view of the rear portion of the straddled vehicle 1b. As illustrated in FIGS. 10 and 11, the straddled vehicle 1b includes a first side cover 61 and a stay 62. The first side cover 61 is detachably attached to the vehicle body cover 23. The first side cover 61 is made of, for example, resin. The first side cover 61 may be made of another material such as metal.

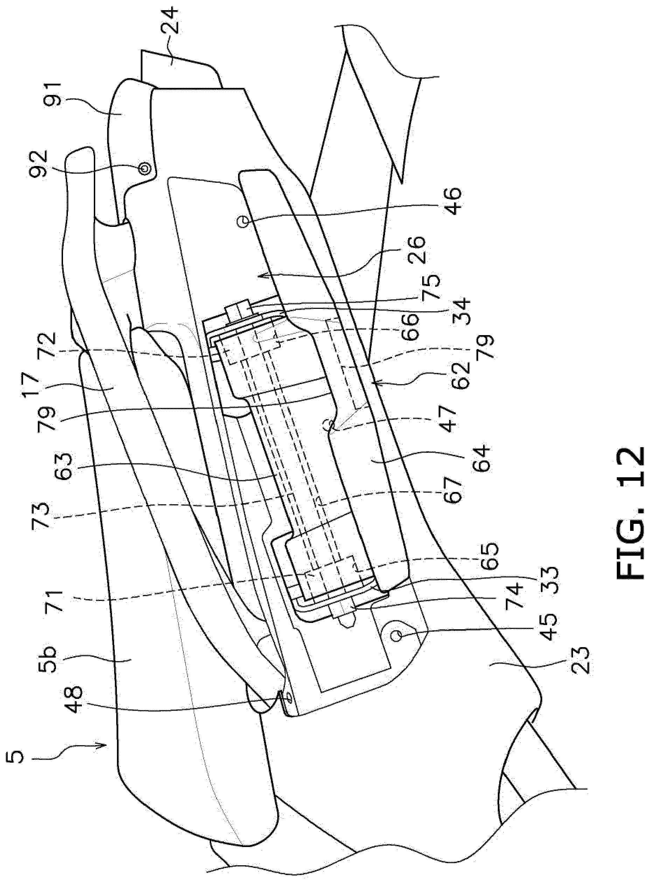

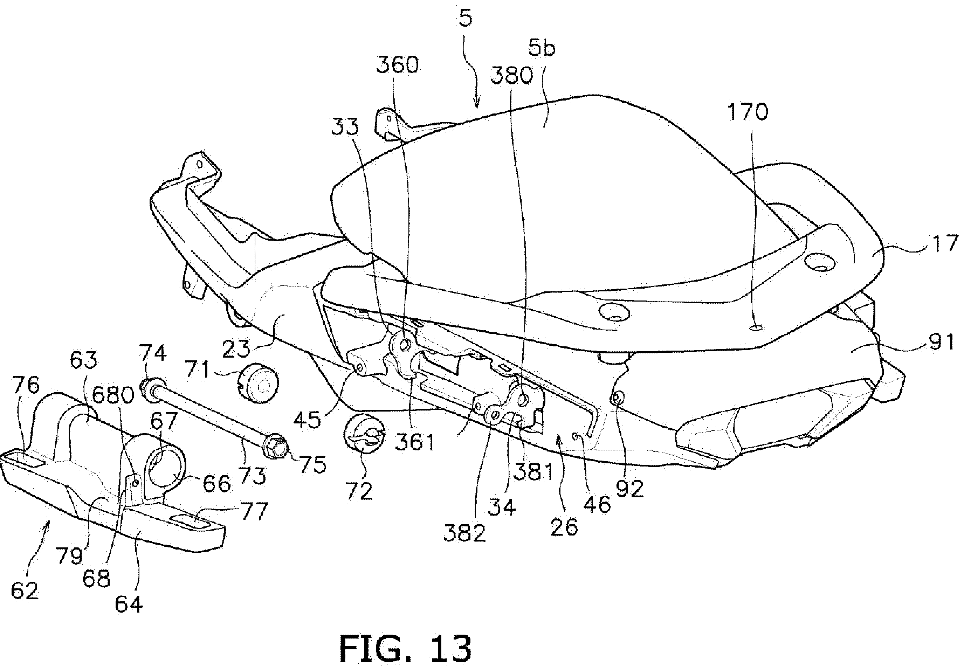

The stay 62 is attached to the brackets 33 and 34 described above. The stay 62 is made of metal, for example. FIG. 12 is a side view of the rear portion of the straddled vehicle 1b from which the first side cover 61 has been removed. FIG. 13 is an exploded perspective view of the rear portion of the straddled vehicle 1b. As illustrated in FIGS. 12 and 13, the stay 62 includes a connecting portion 63 and a mounting portion 64. The connecting portion 63 is connected to the brackets 33 and 34. The connecting portion 63 has a tubular shape. The connecting portion 63 includes a first recess 65, a second recess 66, and a shaft hole 67. The first recess 65 is recessed rearward from a front surface of the connecting portion 63. The second recess 66 is recessed forward from a rear surface of the connecting portion 63. The shaft hole 67 extends through the connecting portion 63 in the front-rear direction. The shaft hole 67 communicates the first recess 65 and the second recess 66.

The connecting portion 63 is attached to the brackets 33 and 34 via a first elastic body 71, a second elastic body 72, a shaft 73, a first bolt 74, and a second bolt 75. The first elastic body 71 is made of rubber, for example. The first elastic body 71 has a cylindrical shape. The first elastic body 71 includes a hole. The first elastic body 71 is arranged in the first recess 65. The second elastic body 72 is made of rubber, for example. The second elastic body 72 has a cylindrical shape. The second elastic body 72 includes a hole. The second elastic body 72 is arranged in the second recess 66.

The shaft 73 is arranged in the shaft hole 67. The shaft 73 is passed through the holes of the first elastic body 71 and the second elastic body 72. The shaft 73 is passed through the hole 360 of the first bracket 33 and the hole 380 of the second bracket 34. The first bolt 74 fixes the shaft 73 to the first bracket 33. The second bolt 75 fixes the shaft 73 to the second bracket 34.

The connecting portion 63, the first elastic body 71, and the second elastic body 72 are arranged between the first bracket 33 and the second bracket 34. The first bracket 33 is arranged in front of the connecting portion 63. The second bracket 34 is arranged behind the connecting portion 63. The first bracket 33 is sandwiched between the first bolt 74 and the first elastic body 71. The second bracket 34 is sandwiched between the second bolt 75 and the second elastic body 72.

The connecting portion 63 includes a second alignment portion 68. The second alignment portion 68 includes a hole 680. The hole 680 of the second alignment portion 68 faces the hole 383 of the first alignment portion 382. A pin member (not illustrated) is inserted into the hole 680 of the second alignment portion 68 and the hole 383 of the first alignment portion 382. The first protrusion 361 and the second protrusion 381 described above are arranged below the connecting portion 63 and face a bottom portion of the connecting portion 63. As a result, the stay 62 is aligned to the first bracket 33 and the second bracket 34.

The mounting portion 64 is connected to the bottom portion of the connecting portion 63. The mounting portion 64 extends laterally outward from the connecting portion 63. The mounting portion 64 extends to behind the connecting portion 63. The side case 10 is attached to the mounting portion 64. The connecting portion 63 is located above the mounting portion 64 as seen in the vehicle side view. The mounting portion 64 includes mounting holes 76 to 78. The mounting holes 76 to 78 include a first mounting hole 76, a second mounting hole 77, and a third mounting hole 78. The first mounting hole 76 and the second mounting hole 77 are arranged on an upper surface of the mounting portion 64. The second mounting hole 77 is arranged behind the first mounting hole 76. The first mounting hole 76 and the second mounting hole 77 are opened upward.

The upper surface of the mounting portion 64 includes a recess 79. The recess 79 is arranged between the first mounting hole 76 and the second mounting hole 77. As illustrated in FIG. 12, the third mounting hole 78 is arranged on a lower surface of the mounting portion

64. The third mounting hole 78 has a shape recessed upward from the lower surface of the mounting portion 64. The third mounting hole 78 is located below the recess 79. The side case 10 is attached to the first mounting hole 76, the second mounting hole 77, and the third mounting hole 78.

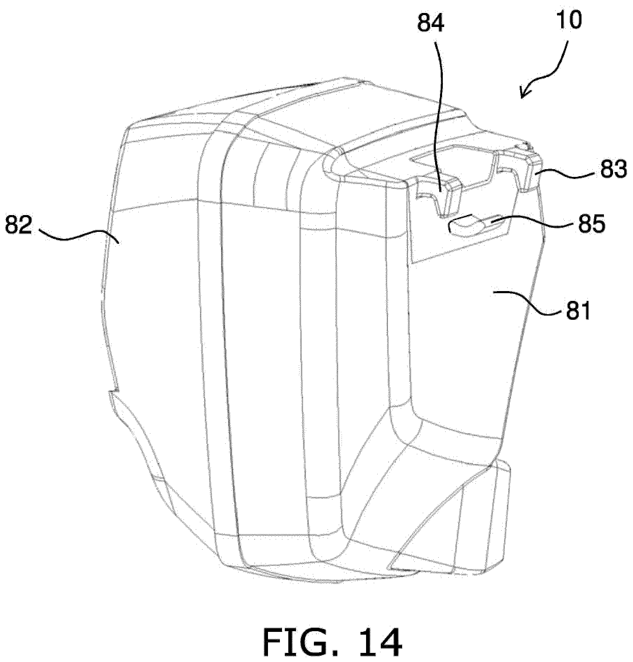

FIG. 14 is a perspective view of the side case 10. The side case 10 has an internal space in which articles can be stored. The side case 10 includes a case body 81 and a lid 82. The lid 82 is attached to the case body 81 via a hinge (not illustrated). The lid 82 is configured to open and close the case body 81. The side case 10 includes a first locking portion 83 and a second locking portion 84. The first locking portion 83 projects from an inner lateral surface of the case body 81. The first locking portion 83 has a shape that is bent downward. The second locking portion 84 is arranged behind the first locking portion 83. The second locking portion 84 projects from the inner lateral surface of the case body 81. The second locking portion 84 has a shape that is bent downward.

The side case 10 includes a lock member 85. The lock member 85 is arranged below the first locking portion 83 and the second locking portion 84. The lock member 85 projects from the inner lateral surface of the case body 81. The lock member 85 has a shape that is bent upward. The lock member 85 is configured to move to the lock position and the release position. The lock member 85 is held at the lock position or the release position in conjunction with a key cylinder (not illustrated).

The first locking portion 83 is inserted into the first mounting hole 76. As a result, the first locking portion 83 is locked to the mounting portion 64. The second locking portion 84 is inserted into the second mounting hole 77. As a result, the second locking portion 84 is locked to the mounting portion 64. The lock member 85 is inserted into the third mounting hole 78. As a result, the lock member 85 is locked to the mounting portion 64.

As illustrated in FIG. 11, the first side cover 61 includes the first to third mounting holes 87 to 89. The first mounting hole 87 and the second mounting hole 88 are arranged on a side surface of the first side cover 61. The first mounting hole 87 and the second mounting hole 88 are arranged along a lower edge of the first side cover 61. The second mounting hole 88 is arranged rearward of the first mounting hole 87. The third mounting hole 89 is arranged on an upper surface of the first side cover 61.

The first side cover 61 is attached to the vehicle body cover 23 by the first, second, and fourth fixing members 51, 52, and 54. The first fixing member 51 is inserted into the first mounting hole 87 of the first side cover 61 and the first hole 45 of the vehicle body cover 23. The second fixing member 52 is inserted into the second mounting hole 88 of the first side cover 61 and the second hole 46 of the vehicle body cover 23. The fourth fixing member 54 is inserted into the third mounting hole 89 of the first side cover 61 and the fourth hole 48 of the vehicle body cover 23.

The above-mentioned third fixing member 53 is not used for attaching the first side cover 61 to the vehicle body cover 23. As illustrated in FIG. 10, the third hole 47 overlaps with the stay 62 as seen in the vehicle side view. Therefore, the third hole 47 is invisible as seen in the vehicle side view. As a result, deterioration of the design of the straddled vehicle 1b is prevented.

The first side cover 61 overlaps with the connecting portion 63 as seen in the vehicle side view. The first side cover 61 overlaps with a part or all of the first bolt 74 as seen in the vehicle side view. The first side cover 61 overlaps with a part or all of the second bolt 75 as seen in the vehicle side view. In a state that the side case 10 is attached to the straddled vehicle 1b, the first fixing member 51 and the second fixing member 52 overlap with the side case 10 as seen in the vehicle side view. Therefore, it is difficult to access the first fixing member 51 and the second fixing member 52 from the outside. As a result, the crime prevention property of the side case 10 is improved.

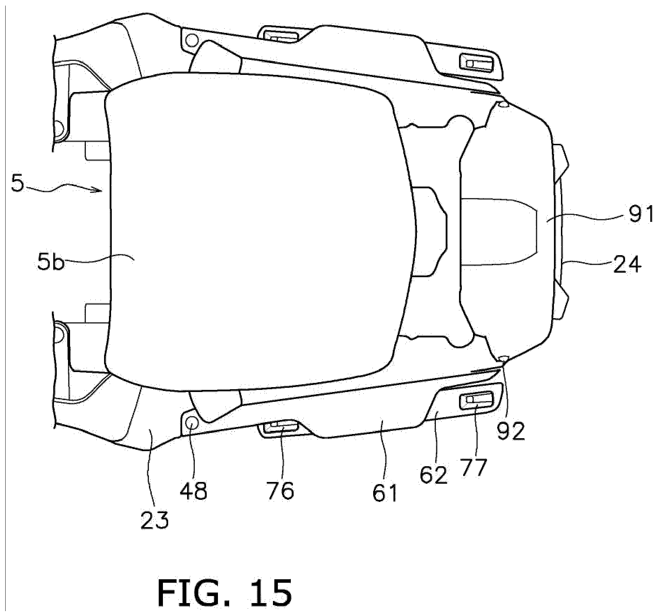

FIG. 15 is a top view of the rear portion of the straddled vehicle 1b. In FIG. 15, the grab bar 17 is omitted for ease of understanding. As illustrated in FIG. 15, at least a part of the first side cover 61 does not overlap with the mounting holes 76 and 77 as seen in the vehicle top view. At least a part of the first mounting hole 76 does not overlap with the first side cover 61 and is located laterally outward of the first side cover 61. At least a part of the second mounting hole 77 does not overlap with the first side cover 61 and is located laterally outward of the first side cover 61. As a result, the side case 10 can be easily attached to the first mounting hole76 and the second mounting hole77.

The structure on the left side of the optional type straddled vehicle 1b has been described above, but the structure on the right side is symmetrical with the structure on the left side and is the same as the structure on the left side.

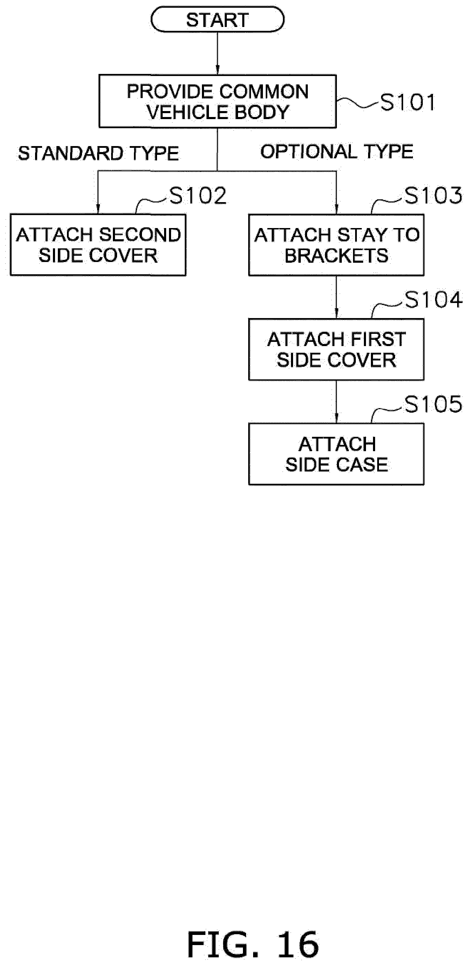

Next, a method for manufacturing the straddled vehicles 1a and 1b will be described. FIG. 16 is a flowchart showing the method for manufacturing the straddled vehicles 1a and 1b. As illustrated in FIG. 16, in step S101, a common vehicle body is provided. The common vehicle body has a structure common to the standard type straddled vehicle 1a and the optional type straddled vehicle 1b. Specifically, as illustrated in FIGS. 4 and 5, the common vehicle body is a standard type straddled vehicle 1a with the second side cover 25 omitted.

In the manufacture of the standard type straddled vehicle 1a, the process proceeds from step S101 to step S102. In step S102, the second side cover 25 is attached to the vehicle body cover 23. Here, the first to fourth fixing members 51 to 54 are inserted into the first to fourth holes 45 to 48. The same process as on the left side is applied to the right side of the vehicle. As a result, a standard type straddled vehicle 1a is manufactured.

In the manufacture of the optional type straddled vehicle 1b, the process proceeds from step S101 to step S103. In step S103, the stay 62 is attached to the brackets 33 and 34. Here, the stay 62 is attached to the brackets 33 and 34 by the first and second bolts 74 and 75 and the shaft 73.

Next, in step S104, the first side cover 61 is attached to the vehicle body cover 23. Here, the first, second, and fourth fixing members 51, 52, and 54 are inserted into the first, second, and fourth holes 45, 46, and 48. Then, in step S105, the side case 10 is attached to the stay 62. The same process as on the left side is applied to the right side of the vehicle. As a result, the optional type straddled vehicle 1b is manufactured.

In the straddled vehicles 1a and 1b according to the present embodiment described above, the standard type straddled vehicle 1a and the optional type straddled vehicle 1b can be easily and selectively manufactured. In the optional type straddled vehicle 1b, the stay 62 is attached to the brackets 33 and 34. Therefore, in the optional type straddled vehicle 1b, the side case 10 can be easily attached to the vehicle. Further, the mounting portion 64 and the connecting portion 63 of the stay 62 are hidden by the side case 10 and the first side cover 61, respectively. As a result, the design of the optional type straddled vehicle 1b is improved. The standard type straddled vehicle 1a does not have the stay 62, and the openings 28 and 29 are closed by the second side cover 25. Therefore, in the standard type straddled vehicle 1a, the design is improved. Further, the side case 10 can be easily attached by retrofitting the stay 62 for the side case 10 to the brackets 33 and 34.

The straddled vehicles 1a and 1b of the above embodiment are so-called street motorcycles. However, the straddled vehicle of the present teaching is not limited to the street motorcycle, and may be an off-road motorcycle. Alternatively, the straddled vehicle may be a scooter, underbone, or moped.

The configurations of the straddled vehicles 1a and 1b are not limited to those of the above-described embodiment, and may be changed. For example, the shape of the vehicle body frame 2 is not limited to that of the above embodiment, and may be changed. The power unit 6 is not limited to the internal combustion engine, and may include an electric motor. The number of front wheels 7 is not limited to one, and may be two or more. The number of rear wheels 9 is not limited to one, and may be two or more.

The shape of the first side cover 61 is not limited to that of the above embodiment, and may be changed. The shape of the second side cover 25 is not limited to that of the above embodiment, and may be changed. The shape of the stay 62 is not limited to that of the above embodiment, and may be changed. In the standard type straddled vehicle 1a, the number of fixing members is not limited to four. The number of fixing members may be less than four or more than four. In the optional type straddled vehicle 1b, the number of fixing members is not limited to three. The number of fixing members may be less than three or more than three. The number of mounting holes in the stay 62 is not limited to three. The number of mounting holes may be less than three or more than three.

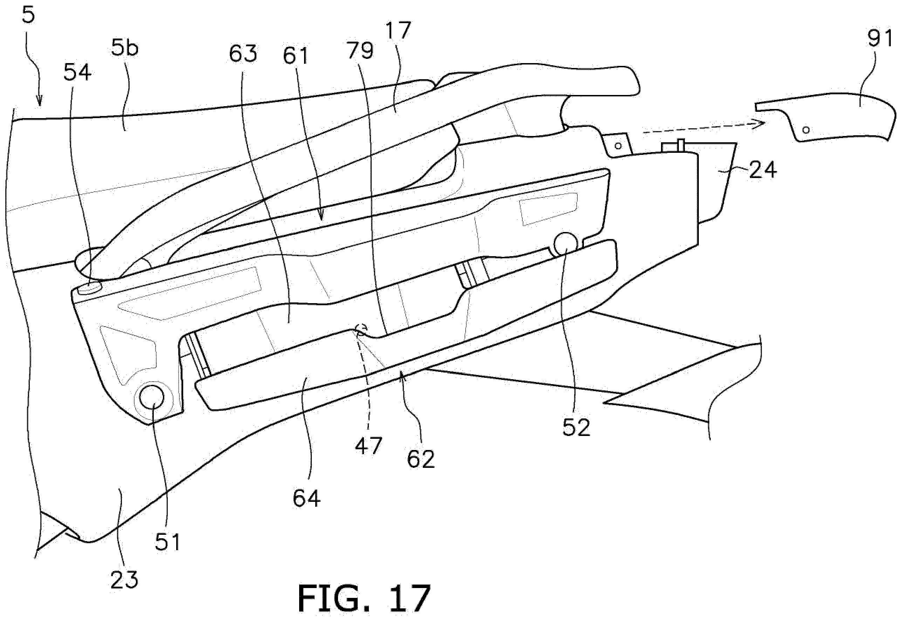

FIG. 17 is a perspective view of the rear portion of the straddled vehicle 1b according to a first modification. As illustrated in FIG. 17, the straddled vehicle 1b may include a rear cover 91. The rear cover 91 may be arranged below the grab bar 17. That is, the rear cover 91 may overlap with the grab bar 17 as seen in the vehicle top view. The rear cover 91 may be attached to the vehicle body cover 23 by a bolt 92. A head of the bolt 92 may be facing laterally outward of the vehicle. The rear cover 91 may be removed from the vehicle body cover 23 by sliding the rear cover 91 rearward of the vehicle. Further, the rear cover 91 may be attached to the vehicle body cover 23 by sliding the rear cover 91 from the rear to the front of the vehicle. In this case, the rear cover 91 can be easily attached and detached even if the gap between the vehicle body cover 23 and the grab bar 17 is narrow.

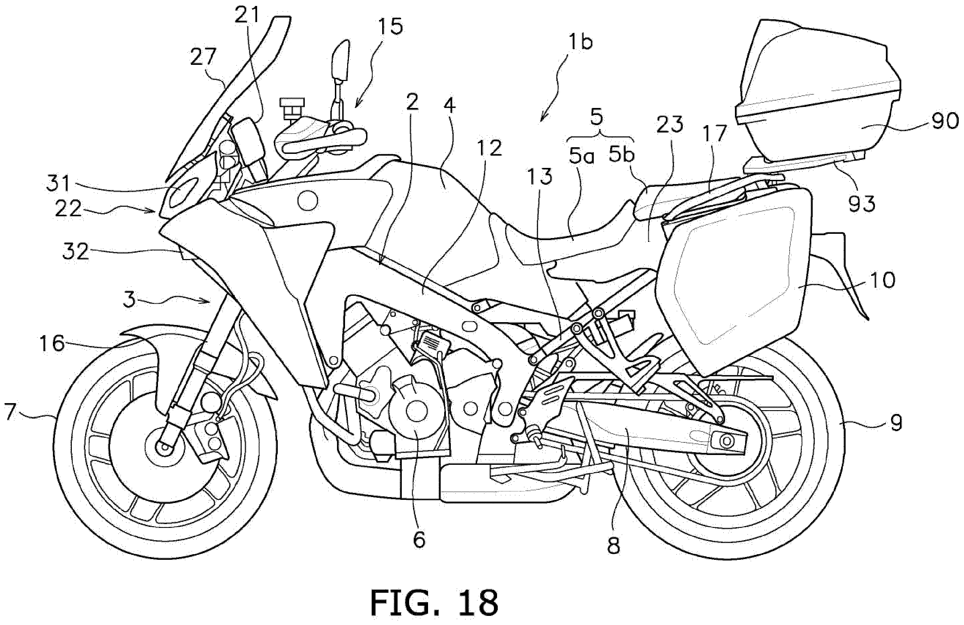

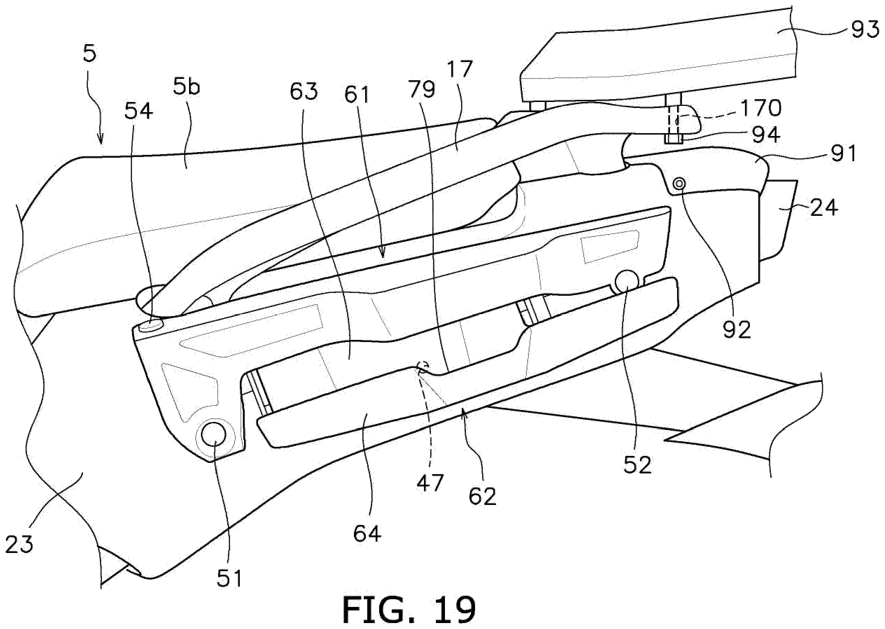

FIG. 18 is a side view showing the straddled vehicle 1b according to a second modification. FIG. 19 is a side view of the rear portion of the straddled vehicle 1b according to the second modification. As illustrated in FIG. 18, the straddled vehicle 1b may include a top case 90. The top case 90 is attached to the vehicle via a stay 93 for the top case 90. As illustrated in FIG. 19, the grab bar 17 may include a hole 170. The stay 93 for the top case 90 may be fixed to the grab bar 17 by a bolt 94. The bolt 94 may be passed through the hole 170 of the grab bar 17. A head of the bolt 94 may be arranged between the grab bar 17 and the rear cover 91. A front end of the rear cover 91 may be located forward of the head of the bolt 94. The rear cover 91 can be attached and detached by sliding the rear cover 91 in the front-rear direction of the vehicle, similarly to the straddled vehicle 1b according to the first modification. In this case, by removing the rear cover 91 from the vehicle body cover 23, the space below the head of the bolt 94 is expanded. This facilitates tool access to the bolt 94.

### REFERENCE SIGNS LIST

5: Seat, 10: Side case, 13: Rear frame, 23: Vehicle body cover, 25: Second side cover, 28: First opening, 33: First bracket, 34: Second bracket, 45: First hole, 46: Second hole, 47: Third hole, 51: First fixing member, 52: Second fixing member, 53: Third fixing member, 61: First side cover, 62: Stay, 63: Connecting portion, 64: Mounting portion, 67: Shaft hole, 76: First mounting hole

## Claims

1. A straddled vehicle comprising:
a seat (5);
a frame (2) arranged below the seat (5);
a vehicle body cover (23) that includes at least one opening (28, 29) located on a lateral side of the frame (2) and covers the frame (2) from the lateral side;
a side case (10);
at least one bracket (33, 34) for attaching a stay (62) for the side case (10) and connected to the frame (2);
the bracket (33, 34) is arranged in the opening (28, 29),
the stay (62) including a connecting portion (63) and a mounting portion (64), the connecting portion (63) being connected to the bracket (33, 34), the mounting portion (64) extending from the connecting portion (63);
the side case (10) is attached to the mounting portion (64); and
a first side cover (61) that overlaps with the connecting portion (63) as seen in a vehicle side view and is attached to the vehicle body cover (23), **characterized in that** the mounting portion (64) includes at least one mounting hole (76, 77) into which the side case (10) is mounted,
the mounting hole (76, 77) is open upward, and
a part of the first side cover (61) does not overlap with the mounting hole (79, 77) as seen in a vehicle top view.

2. The straddled vehicle according to claim 1, **characterized in that** the stay (62) is made of metal, and the first side cover (61) is made of resin.

3. The straddled vehicle according to claim 1 or 2, **characterized by:**
a plurality of fixing members (51 - 54) that fix the first side cover (61) to the vehicle body cover (23); wherein
at least one of the plurality of fixing members (51 - 54) overlaps with the side case (10) as seen in the vehicle side view.

4. The straddled vehicle according to claim 3, **characterized in that** the vehicle body cover (23) includes a plurality of holes (45 - 48),
the plurality of fixing members (51 - 54) are inserted into a part of the plurality of holes (45 - 48), and
at least one of the plurality of holes (45 - 48) overlaps with the stay (62) as seen in the vehicle side view.

5. The straddled vehicle according to claim 4, **characterized in that** the plurality of fixing members (51 - 54) include a first fixing member (51) and a second fixing member (52),
the plurality of holes (45 - 48) includes
a first hole (45) into which the first fixing member (51) is inserted,
a second hole (46) into which the second fixing member (52) is inserted, and
a third hole (47) arranged between the first hole (45) and the second hole (46), and
the third hole (47) overlaps with the stay (62) as seen in the vehicle side view.

6. The straddled vehicle according to any one of claims 1 to 5, **characterized in that** the connecting portion (63) includes a through hole (67) extending in a front-rear direction of the vehicle,
the bracket includes
a first bracket (33) arranged in front of the connecting portion (63), and
a second bracket (34) arranged behind the connecting portion (63), and
the straddled vehicle further comprising a shaft (73) that is passed through the through hole (67) and is fixed to the first bracket (33) and the second bracket (34).

## Patentansprüche

1. Ein Spreiz-Sitz-Fahrzeug, das umfasst:
einen Sitz (5);
einen Rahmen (2), der unterhalb des Sitzes (5) angeordnet ist;
eine Fahrzeug-Körper-Abdeckung (23), die zumindest eine Öffnung (28, 29) aufweist, die sich an einer Lateral-Seite des Rahmens (2) befindet und den Rahmen (2) von der Lateral-Seite her abdeckt;
einen Seitenkoffer (10);
zumindest eine Halterung (33, 34) zur Befestigung einer Strebe (62) für den Seitenkoffer (10), und die mit dem Rahmen (2) verbunden ist;
die Halterung (33, 34) ist in der Öffnung (28, 29) angeordnet,
die Strebe (62) beinhaltet einen Verbindungsabschnitt (63) und einen Montageabschnitt (64), der Verbindungsabschnitt (63) ist mit der Halterung (33, 34) verbunden, der Montageabschnitt (64) erstreckt sich von dem Verbindungsabschnitt (63);
der Seitenkoffer (10) ist an dem Montageabschnitt (64) angebracht; und
eine erste Seitenabdeckung (61), die sich in einer Fahrzeugseitenansicht mit dem Verbindungsabschnitt (63) überlappt und an der Fahrzeug-Körper-Abdeckung (23) befestigt ist, **dadurch gekennzeichnet, dass** der Montageabschnitt (64) zumindest ein Montageloch (76, 77) beinhaltet, in das der Seitenkoffer (10) montiert wird,
das Montageloch (76, 77) ist nach oben offen, und
ein Teil der ersten Seitenabdeckung (61) überlappt nicht mit dem Montageloch (79, 77), wenn in der Ansicht von oben auf das Fahrzeug gesehen.

2. Das Spreiz-Sitz-Fahrzeug gemäß Anspruch 1, **dadurch gekennzeichnet, dass** die Strebe (62) aus Metall und die erste Seitenabdeckung (61) aus Harz gemacht sind.

3. Das Spreiz-Sitz-Fahrzeug gemäß Anspruch 1 oder 2, **gekennzeichnet durch:**
eine Mehrzahl von Befestigungselementen (51 - 54), welche die erste Seitenabdeckung (61) an der Fahrzeug-Körper-Abdeckung (23) befestigen; wobei
zumindest eines der Mehrzahl von Befestigungselementen (51 - 54) den Seitenkoffer (10) überlappt, wenn in der Seitenansicht des Fahrzeugs gesehen.

4. Das Spreiz-Sitz-Fahrzeug gemäß Anspruch 3, **dadurch gekennzeichnet, dass** die Fahrzeug-Körper-Abdeckung (23) eine Mehrzahl von Löchern (45-48) aufweist,
die Mehrzahl von Befestigungselementen (51 - 54) in einen Teil der Mehrzahl von Löchern (45 - 48) eingesetzt sind, und
zumindest eines der Mehrzahl von Löchern (45-48) sich mit der Strebe (62) überlappt, wenn in der Seitenansicht des Fahrzeugs gesehen.

5. Das Spreiz-Sitz-Fahrzeug gemäß Anspruch 4, **dadurch gekennzeichnet, dass** die Mehrzahl von Befestigungselementen (51 - 54) ein erstes Befestigungselement (51) und ein zweites Befestigungselement (52) beinhalten,
die Mehrzahl der Löcher (45-48) beinhaltet
ein erstes Loch (45), in welches das erste Befestigungselement (51) eingesetzt ist, ein zweites Loch (46), in welches das zweite Befestigungselement (52) eingesetzt ist, und
ein drittes Loch (47), das zwischen dem ersten Loch (45) und dem zweiten Loch (46) angeordnet ist, und
das dritte Loch (47) überlappt mit der Strebe (62), wenn in der Seitenansicht des Fahrzeugs gesehen.

6. Das Spreiz-Sitz-Fahrzeug gemäß irgendeinem der Ansprüche 1 bis 5, **dadurch gekennzeichnet, dass** der Verbindungsabschnitt (63) ein Durchgangsloch (67) beinhaltet, das sich in einer Front-Rück-Richtung des Fahrzeugs erstreckt,
die Halterung beinhaltet
einer ersten Halterung (33), die vor dem Verbindungsabschnitt (63) angeordnet ist, und
einer zweiten Halterung (34), die hinter dem Verbindungsabschnitt (63) angeordnet ist, und
das Spreiz-Sitz-Fahrzeug umfasst weiterhin eine Welle (73), die durch das Durchgangsloch (67) hindurch tritt und an der ersten Halterung (33) und der zweiten Halterung (34) befestigt ist.

## Revendications

1. Véhicule à selle comprenant :
un siège (5),
un cadre (2) disposé en dessous du siège (5),
un carénage de véhicule (23) qui inclut au moins une ouverture (28, 29) située sur un côté du cadre (2) et recouvre le cadre (2) depuis le côté,
une valise latérale (10),
au moins un support (33, 34) destiné à fixer un étai (62) pour la valise latérale (10) et qui est relié au cadre (2),
le support (33, 34) est disposé dans l'ouverture (28, 29),
l'étai (62) inclut un organe de raccordement (63) et un organe de montage (64), l'organe de raccordement (63) étant relié au support (33, 34), l'organe de montage (64) s'étendant depuis l'organe de raccordement (63),
la valise latérale (10) est fixée à l'organe de montage (64), et
un premier carter latéral (61) qui chevauche l'organe de raccordement (63) comme on peut le voir dans une vue latérale du véhicule et qui est fixé au carénage de véhicule (23), **caractérisé en ce que** l'organe de montage (64) inclut au moins un trou de montage (76, 77) dans lequel est montée la valise latérale (10),
le trou de montage (76, 77) est ouvert vers le haut, et
une partie du premier carter latéral (61) ne chevauche pas le trou de montage (76, 77) comme on peut le voir dans une vue de dessus du véhicule.

2. Véhicule à selle selon la revendication 1, **caractérisé en ce que** l'étai (62) est constitué de métal et **en ce que** le premier carter latéral (61) est constitué de résine.

3. Véhicule à selle selon la revendication 1 ou la revendication 2, **caractérisé par :**
une pluralité d'éléments de fixation (51 à 54) qui immobilisent le premier carter latéral (61) sur le carénage de véhicule (23), où
au moins l'un de la pluralité d'éléments de fixation (51 à 54) chevauche la valise latérale (10) comme on peut le voir dans la vue latérale du véhicule.

4. Véhicule à selle selon la revendication 3, **caractérisé en ce que** le carénage de véhicule (23) inclut une pluralité de trous (45 à 48),
les différents éléments de fixation (51 à 54) sont insérés dans une partie de la pluralité de trous (45 à 48), et
au moins l'un de la pluralité de trous (45 à 48) chevauche l'étai (62) comme on peut le voir dans la vue latérale du véhicule.

5. Véhicule à selle selon la revendication 4, **caractérisé en ce que** la pluralité d'éléments de fixation (51 à 54) inclut un premier élément de fixation (51) et un deuxième élément de fixation (52),
la pluralité de trous (45 à 48) inclut :
un premier trou (45) dans lequel est inséré le premier élément de fixation (51),
un deuxième trou (46) dans lequel est inséré le deuxième élément de fixation (52), et
un troisième trou (47) disposé entre le premier trou (45) et le deuxième trou (46), et
le troisième trou (47) chevauche l'étai (62) comme on peut le voir dans la vue latérale du véhicule.

6. Véhicule à selle selon l'une quelconque des revendications 1 à 5, **caractérisé en ce que** l'organe de raccordement (63) inclut un trou traversant (67) s'étendant dans la direction avant arrière du véhicule,
le support inclut :
un premier support (33) disposé en avant de l'organe de raccordement (63), et
un second support (34) disposé en arrière l'organe de raccordement (63), et
le véhicule à selle comprend en outre un arbre (73) qui est passé au travers du trou traversant (67) et qui est fixé au premier support (33) et au second support (34).
